# EUROPEAN PATENT SPECIFICATION

(11) **EP 2 000 727 B1**
(45) Date of publication and mention of the grant of the patent: **30.06.2010**
(21) Application number: 07109747.1
(22) Date of filing: 06.06.2007
(51) Int. Cl.: F16L 21/03, F16L 27/12, F16L 39/00, F16L 39/04, F23J 13/04

(54) **Telescopic and anti-decoupling end pipe for condensing boiler flues**
Teleskopisches und mit Entkopplungsschutz versehenes Rohrendstück für Brennwertkesselabgasrohre
Extrémité téléscopique et anti-découplage d'un tuyau d'échappement pour une chaudière à condensation

(43) Date of publication of application: 10.12.2008
(73) Proprietor: LN 2 - S.R.L., 62010 Montecassiano (MC) (IT)
(72) Inventor: Fraticelli, Gabriele, 62011, Cingoli (MC) (IT)
(74) Representative: Fabris, Stefano

(56) References cited:
- EP-A- 0 124 678
- DE-U1- 20 018 944
- GB-A- 2 372 084

## Description

The subject of the present patent application is an end pipe, of telescopic type, for discharging into the atmosphere the fumes produced by condensing boilers.

Telescopic and anti-decoupling end pipes are known from GB-A-2372084. Also DE 20018944 discloses a telescopic end pipe suitable for boiler flues and provided with anti-decoupling means.

By end pipe there is meant that last section of the flue which passes horizontally through the outer wall of the building and which functions as a connection between the fume vent, placed immediately outside said wall, and the 90° elbow connector positioned at the vertex of the vertical section of the discharge pipe which protrudes from the boiler.

It will be recalled that the discharge pipe employed by condensing boilers is formed by a coaxial pair of tubes, the inner tube traversed by the ascending current of combustion fumes, the other, outer tube traversed in a countercurrent by the comburent air which is drawn in from the outside owing to a slight under-pressure created within the boiler space.

At present, said end section is installed by inserting it, from the inside towards the outside, through a suitable hole made if necessary in the wall of the building, after which it is coupled to said elbow connector at one end, and to said vent at the other.

Since the distance between said elbow connector and the wall varies each time, the installer always has to cut said end section of tube to size, so that it does not project too far outside the wall itself.

In order to avoid the inconvenience and loss of time necessary to carry out said cutting to size, end pipes of telescopic type have already been proposed for some time, so as to be able to extend or shorten said pipes to the most suitable length in all circumstances.

It is reported, however, that said telescopic type end pipes are not equipped with anti-decoupling means, so that they may accidentally decouple while being handled, if not manoeuvred precisely, or even be prey to acts of hooliganism or vandalism by means of which the pipe is grasped from outside and completely withdrawn from the wall into which it is inserted.

On the basis of this last finding, it was wished to produce a new improved model of telescopic type end pipe for discharging to the atmosphere the fumes produced by condensing boilers, which was free of the drawbacks mentioned above.

More precisely, this new model of end pipe can boast of being equipped with anti-decoupling means that are simple and economic to produce, but effective and reliable.

In fact, said anti-decoupling means are in part provided at the actual sealing ring, with which the telescopic end pipe must in any case be equipped in order to prevent the loss of fumes towards the annular gap traversed by the comburent air.

To this end, there has been imparted to said sealing ring a sawtooth profile capable of hooking itself, at its limit of extension, onto a tooth or a hook provided on the outer edge of the end section of each male element of the telescopic pipe.

For greater clarity of explanation, the description of the telescopic type end pipe according to the invention is given with reference to the appended drawings, provided solely by way of non-limiting example, and in which:
- Fig. 1 is a section in an axial plane of the end pipe according to the invention, in a state of maximum extension, inserted through a wall, illustrated diagrammatically;
- Fig. 2 shows only the pair of outer tubes of the telescopic pipe, in a state of maximum extension;
- Fig. 3 is an enlarged detail of Figure 2;
- Fig. 4 shows only the pair of outer tubes of the telescopic pipe, in a state of minimum extension;
- Fig. 5 is an enlarged detail of Fig. 4;
- Fig. 6 shows only the pair of inner tubes of the telescopic pipe, in a state of maximum extension;
- Fig. 7 is an enlarged detail of Figure 6;
- Fig. 8 shows only the pair of inner tubes of the telescopic pipe, in a state of minimum extension;
- Fig. 9 is an enlarged detail of Figure 8.

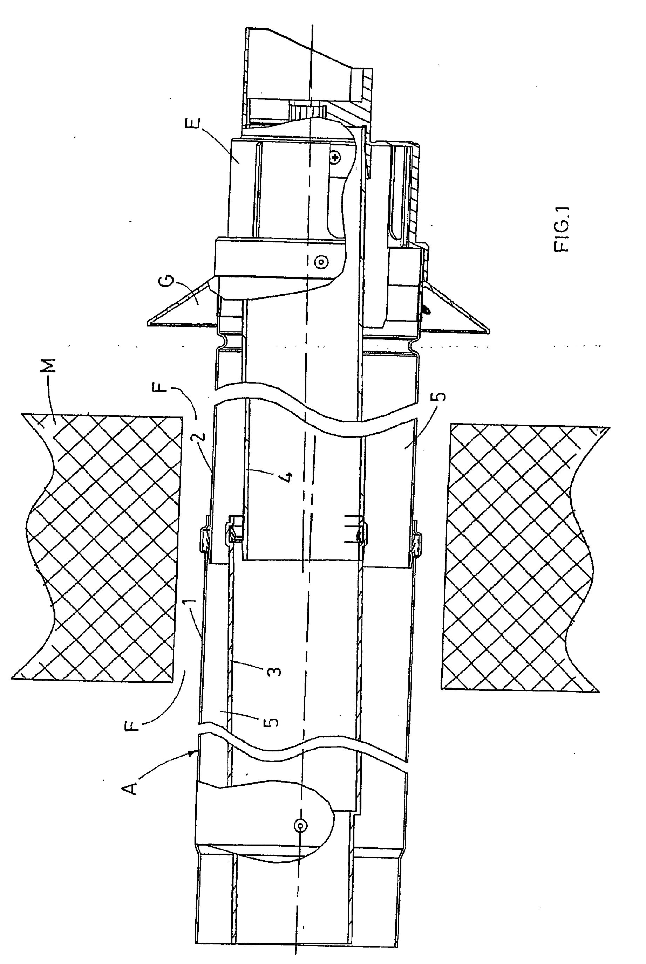

With reference to Figure 1, the end pipe (A) of telescopic type according to the invention is intended to be inserted, from the inside towards the outside, into a hole (F), made in the wall (M) of the building, in order then to be equipped with a fume vent (E), which is fitted onto the end section of said pipe (A), with prior insertion of a ring (G) for abutment and trimming against the wall (M).

Said pipe (A) is formed by an outer pair of telescopic tubes (1 and 2) and by an inner pair of telescopic tubes (3 and 4), so as to form an annular air gap (5), intended to be traversed by the comburent air, while on the inside of the pair of inner tubes (3 and 4) rises the ascending current of combustion fumes directed towards the vent (E) for discharge into the atmosphere.

In the case where the anti-decoupling means must be provided at the outer pair of tubes (1 and 2), which are customarily of sheet metal, then one or more hooks (6) are provided, protruding on the outside of the edge of the end section (2a) of the male element of the telescopic coupling (1, 2), which element in the case in point will be the tube (2) which is inserted and can slide inside the tube (1), which can therefore be regarded as the female element of the telescopic coupling (1,2).

As to the female element (1), in proximity to its end (1a) an internal groove (7) is provided on it, suitable for receiving a packing ring (8) having a sawtooth profile (8a) with the teeth inclined backwards with respect to the direction of decoupling of the tube (2) with respect to the tube (1).

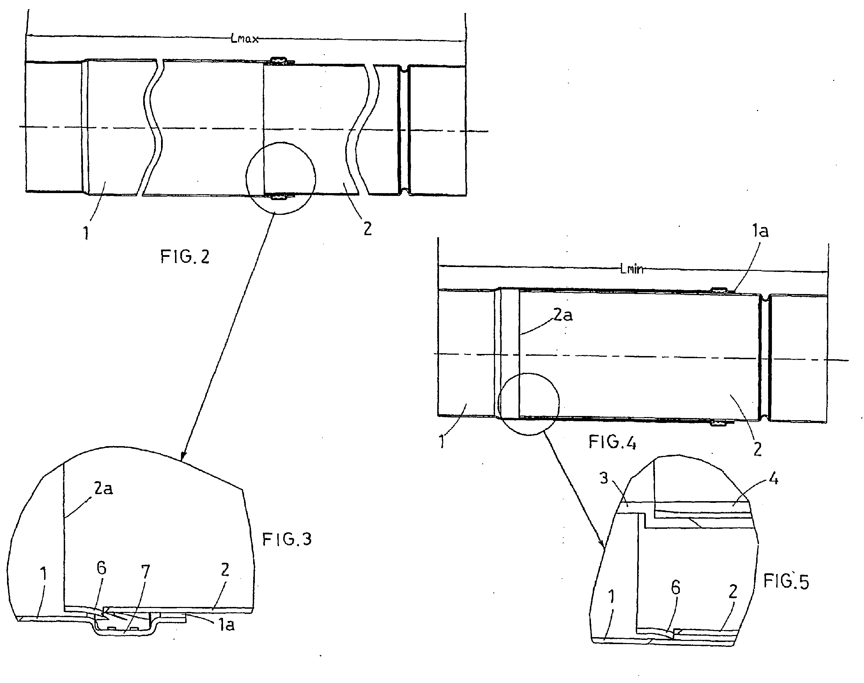

This means that the free travel of extension of the tube (2) inside the tube (1) encounters a stop abutment when the hooks (6) of the tube (2) interfere and hook against the teeth (8a) of the packing ring (8), as shown in the enlargement in Fig. 3.

In the case where the anti-decoupling means must be provided at the inner pair of tubes (3 and 4), which are customarily made of plastics material, then an annular tooth (9) is provided, protruding on the outside of the edge of the end section (4a) of the male element of the telescopic coupling (3, 4), which element in the case in point would be the tube (4) which is inserted and can slide inside the tube (3), which may therefore be regarded as the female element of the telescopic coupling (3, 4).

As to the female element (3), in proximity to its end (3a) an internal groove (10) is provided on it, suitable for receiving a packing ring (8) having a sawtooth profile (8a) with the teeth inclined backwards with respect to the direction of decoupling of the tube (4) with respect to the tube (3).

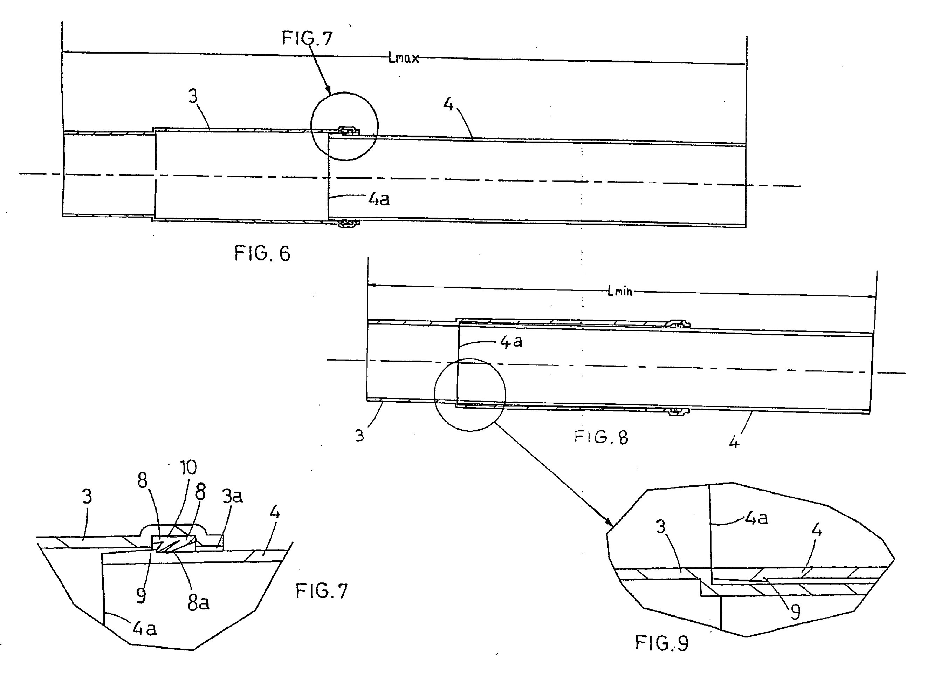

This means that the free travel of extension of the tube (4) inside the tube (3) encounters a stop abutment when the tooth (9) of the tube (4) interferes and hooks against the teeth (8a) of the packing ring (8), as shown in the enlargement in Fig. 7.

It is stated that the tubes 3 and 4 may be made of plastics material simply because in condensing boilers the fumes leave the boiler at a temperature of around 80°C, whereas in conventional boilers said temperature is around 150°C, necessitating the use of sheet metal tubes.

In the case where the pair of inner tubes (3 and 4) is made of sheet metal and not of plastics material, then the tube (4) will be equipped with hooks identical to those (6) mentioned previously.

On the other hand, in the case where the pair of outer tubes (1 and 2) is made of plastics material and not of sheet metal, then the tube (2) will be equipped with an annular tooth identical to that (9) mentioned previously.

## Claims

1. A telescopic and anti-decoupling end pipe for condensing boiler flues, of the type formed by an outer pair of telescopic female and male tubes (1 and 2) and by an inner pair of telescopic female and male tubes (3, 4), where the male outer tube (2) is inserted and slides inside the female outer tube (1), while the male inner tube (4) is inserted and slides inside the female inner tube (3), the outer tubes (1, 2) being made of sheet metal and one or more hooks (6) being provided and protruding on the outside of the edge of the end section (2a) of oxter male tube (2), while the outer female tube (1) has in proximity to its end (1a), an inner groove (7), suitable for receiving a packing ring (8), **characterised in that** said packing ring has a sawtooth profile (8a) with the teeth inclined backwards with respect to the direction of decoupling of the outer male tube (2) with respect to the female outer tube (1), said sawtooth profile (8a) being capable of hooking itself onto said one or more hooks (6).

2. A telescopic and anti-decouplig end pipe for condensing boiler flues, of the type formed by an outer pair of telescopic female and male tubes (1, 2) and by an inner pair of telescopic female and male tubes (3, 4), where the outer male tube (2) is inserted and slides inside the outer female tube (1), while the inner male tube (4) is inserted and slides inside the inner female tube (3), the inner tubes (3, 4) being made of plastics material and an annular tooth (9) being provided and protruding on the outside of the edge of the end section (4a) of the inner male tube (4), while the inner female tube (3) has in proximity to its end (3a), an inner groove (10), suitable for receiving a packing ring (8), **characterised in that** said packing ring (8) has a sawtooth profile (8a) with the teeth inclined backwards with respect to the direction of decoupling of the inner male tube (4) with respect to the inner female tube (3), said sawtooth profile (8a) being capable of hooking itself onto said annular tooth (9).

3. A telescopic and anti-decoupling end pipe according to claim 1, in which the inner pair of female and male tubes (3, 4) are made of sheet metal and the inner male tube (4) has one or more hooks (6) provided and protruding on the outside of the edge of the end section (4a) of the inner male tube (4), while the inner female tube (3) has, in proximity to its end (3a), an inner groove (7), suitable for receiving a packing ring (8) having a sawtooth profile (8a) with the teeth inclined backwards with respect to the direction of decoupling of the inner male tube (4) with respect to the inner female tube (3).

4. A telescopic and anti-decoupling end pipe according to claim 2, in which the outer pair of female and male tubes (1, 2) are made of plastics material and the outer male tube (2) has an annular tooth (9) provided and protruding on the outside of the edge of the end section (2a) of said outer male tube (2), while the outer female tube (1) has in proximity to its end (1a), an inner groove (10), suitable for receiving a packing ring (8) having a sawtooth profile (8a) with the teeth inclined backwards with respect to the direction of decoupling of the outer male tube (2) with respect to the outer female tube (1).

## Patentansprüche

1. Ein teleskopisches und mit Entkopplungsschutz versehenes Rohrendstück für Brennwertkesselabgasrohre von der Art, die durch ein äußeres Paar teleskopischer Aufnahme- und Einsteckrohre (1 und 2) und durch ein inneres Paar teleskopischer Aufnahme- und Einsteckrohre (3, 4) gebildet wird, bei der das äußere Einsteckrohr (2) im äußeren Aufnahmerohr (1) steckt und darin gleitet, während das innere Einsteckrohr (4) im inneren Aufnahmerohr (3) steckt und darin gleitet, wobei die äußeren Rohre (1, 2) aus Metallblech hergestellt sind und ein oder mehr Haken (6) an der Außenseite der Kante des Endabschnitts (2a) des äußeren Einsteckrohrs (2) vorgesehen sind und hervorragen, während das äußere Aufnahmerohr (1) in der Nähe seines Endes (1a) eine innere Nut (7) besitzt, die geeignet ist, einen Dichtungsring (8) aufzunehmen, **dadurch gekennzeichnet, dass** der Dichtungsring eine Sägezahnprofil (8a) hat, bei dem Zähne in Bezug auf die Entkopplungsrichtung des äußeren Einsteckrohrs (2) in Bezug auf das äußere Aufnahmerohr (1) nach hinten geneigt sind, wobei das Sägezahnprofil (8a) fähig ist, sich selbst in einen oder mehr Haken (6) einzuhaken.

2. Ein teleskopisches und mit Entkopplungsschutz versehenes Rohrendstück für Brennwertkesselabgasrohre von der Art, die durch ein äußeres Paar teleskopischer Aufnahme- und Einsteckrohre (1, 2) und durch ein inneres Paar teleskopischer Aufnahme- und Einsteckrohre (3, 4) gebildet wird, bei der das äußere Einsteckrohr (2) im äußeren Aufnahmerohr (1) steckt und darin gleitet, während das innere Einsteckrohr (4) im inneren Aufnahmerohr (3) steckt und darin gleitet, wobei die inneren Rohre (3, 4) aus Kunststoffmaterial hergestellt sind und ein ringförmiger Zahn (9) an der Außenseite der Kante des Endabschnitts (4a) des inneren Einsteckrohrs (4) vorgesehen ist und hervorragt, während das innere Aufnahmerohr (3) in der Nähe seines Endes (3a) eine innere Nut (10) besitzt, die geeignet ist, einen Dichtungsring (8) aufzunehmen, **dadurch gekennzeichnet, dass** der Dichtungsring (8) ein Sägezahnprofil (8a) hat, bei dem die Zähne in Bezug auf die Entkopplungsrichtung des inneren Einsteckrohrs (4) in Bezug auf das innere Aufnahmerohr (3) nach hinten geneigt sind, wobei das Sägezahnprofil (8a) fähig ist, sich selbst in den ringförmigen Zahn (9) einzuhaken.

3. Teleskopisches und mit Entkopplungsschutz versehenes Rohrendstück gemäß Anspruch 1, bei dem das innere Paar von Aufnahme- und Einsteckrohren (3, 4) aus Metallblech hergestellt ist und das innere Einsteckrohr (4) einen oder mehr Haken (6) besitzt, die an der Außenseite der Kante des Endabschnitts (4a) des inneren Einsteckrohrs (4) vorgesehen sind und hervorragen, während das innere Aufnahmerohr (3) in der Nähe seines Endes (3a) eine innere Nut (7) besitzt, die geeignet ist, einen Dichtungsring (8) aufzunehmen, der ein Sägezahnprofil (8a) hat, bei dem die Zähne in Bezug auf die Entkopplungsrichtung des inneren Einsteckrohrs (4) in Bezug auf das innere Aufnahmerohr (3) nach hinten geneigt sind.

4. Teleskopisches und mit Entkopplungsschutz versehenes Rohrendstück gemäß Anspruch 2, bei dem das äußere Paar von Aufnahme- und Einsteckrohren (1, 2) aus Kunststoffmaterial hergestellt ist und das äußere Einsteckrohr (2) einen ringförmigen Zahn (9) besitzt, der an der Außenseite der Kante des Endabschnitts (2a) des äußeren Einsteckrohrs (2) vorgesehen ist und hervorragt, während das äußere Aufnahmerohr (1) in der Nähe seines Endes (1a) eine innere Nut (10) besitzt, die geeignet ist, einen Dichtungsring (8) aufzunehmen, der ein Sägezahnprofil (8a) hat, bei dem die Zähne in Bezug auf die Entkopplungsrichtung des äußeren Einsteckrohrs (2) in Bezug auf das äußere Aufnahmerohr (1) nach hinten geneigt sind.

## Revendications

1. Tuyau d'extrémité télescopique et anti-découplage pour les tuyaux d'une chaudière de condensation, du type formé par une paire externe de tubes mâle et femelle télescopiques (1 et 2), et par une paire interne de tubes mâle et femelle télescopiques (3, 4), dans lequel le tube externe mâle (2) est inséré et coulisse à l'intérieur du tube externe femelle (1), alors que le tube interne mâle (4) est inséré et coulisse à l'intérieur du tube interne femelle (3), les tubes externes (1, 2) étant réalisés à partir d'une tôle et un ou plusieurs crochets (6) étant prévus et faisant saillie sur l'extérieur du bord de la section d'extrémité (2a) du tube mâle externe (2), alors que le tube femelle externe (1) a, à proximité de son extrémité (1a), une rainure interne (7), appropriée pour recevoir un anneau de garniture (8), **caractérisé en ce que** ledit anneau de garniture a un profil en dents de scie (8a) avec les dents inclinées vers l'arrière par rapport à la direction de découplage du tube mâle externe (2) par rapport au tube externe femelle (1), ledit profil en dents de scie (8a) pouvant s'accrocher lui-même sur lesdits un ou plusieurs crochets (6).

2. Tuyau d'extrémité télescopique et anti-découplage pour les tuyaux d'une chaudière de condensation, du type formé par une paire externe de tubes mâle et femelle télescopiques (1, 2) et par une paire interne de tubes mâle et femelle télescopiques (3, 4), dans lequel le tube mâle externe (2) est inséré et coulisse à l'intérieur du tube femelle externe (1) alors que le tube mâle interne (4) est inséré et coulisse à l'intérieur du tube femelle interne (3), les tubes internes (3, 4) étant réalisés à partir d'une matière plastique et une dent annulaire (9) étant prévue et faisant saillie sur l'extérieur du bord de la section d'extrémité (4a) du tube mâle interne (4), alors que le tube femelle interne (3) a, à proximité de son extrémité (3a), une rainure interne (10) appropriée pour recevoir un anneau de garniture (8), **caractérisé en ce que** ledit anneau de garniture (8) a un profil en dents de scie (8a) avec les dents inclinées vers l'arrière par rapport à la direction de découplage du tube mâle interne (4) par rapport au tube femelle interne (3), ledit profil en dents de scie (8a) étant capable de s'accrocher lui-même sur ladite dent annulaire (9).

3. Tuyau d'extrémité télescopique et anti-découplage selon la revendication 1, dans lequel la paire interne de tubes mâle et femelle (3, 4) est réalisée avec une tôle et le tube mâle interne (4) a un ou plusieurs crochets (6) prévus et faisant saillie sur l'extérieur du bord de la section d'extrémité (4a) du tube mâle interne (4), alors que le tube femelle interne (3) a, à proximité de son extrémité (3a), une rainure interne (7) appropriée pour recevoir un anneau de garniture (8) ayant un profil en dents de scie (8a) avec les dents inclinées vers l'arrière par rapport à la direction de découplage du tube mâle interne (4) par rapport au tube femelle interne (3).

4. Tuyau d'extrémité télescopique et anti-découplage selon la revendication 2, dans lequel la paire externe de tubes mâle et femelle (1, 2) sont réalisés à partir d'une matière plastique, et le tube mâle externe (2) a une dent annulaire (9) prévue et faisant saillie sur l'extérieur du bord de la section d'extrémité (2a) dudit tube mâle externe (2), alors que le tube femelle externe (1) a, à proximité de son extrémité (1a), une rainure interne (10) appropriée pour recevoir un anneau de garniture (8) ayant un profil en dents de scie (8a) avec les dents inclinées vers l'arrière par rapport à la direction de découplage du tube mâle externe (2) par rapport au tube femelle externe (1).
